# EUROPÄISCHE PATENTANMELDUNG

(11) **EP 0 955 529 A1**
(43) Veröffentlichungstag der Anmeldung: **10.11.1999**
(21) Anmeldenummer: 99108584.6
(22) Anmeldetag: 06.05.1999
(51) Int. Cl.: G01F 23/296

(54) **Füllstandsmessgerät**

(30) Priorität: 07.05.1998 DE 19820482
(71) Anmelder: Truma Gerätetechnik GmbH & Co., 85640 Putzbrunn (DE)
(72) Erfinder: Volkwein, Thomas, 85652 Pliening (DE); Fricke, Gerd Dr, 82008 Unterhaching (DE); Hooper, Nickolas, 85640 Putzbrunn (DE); Achatz, Dieter, 81673 München (DE)
(74) Vertreter: Gagel, Roland, Dr.

(57) **Zusammenfassung**

Die Erfindung betrifft ein Füllstandsmeßgerät, das den Füllstand eines Mediums in einem Behältnis mittels Ultraschall mißt.

Das Gerät besteht aus einem Ultraschallwandler (3), einem Trägerelement (1) und einem Anpreßmechanismus (7), wobei der Ultraschallwandler mit einer Ultraschall-Ankoppelschicht aus dauerhaft elastischem Material fest verbunden ist, und der Anpreßmechanismus so angeordnet ist, daß er den Ultraschallwandler bei Aufbringen eines Behältnisses (10) auf das Füllstandsmeßgerät gegen das Behältnis preßt, so daß sich die Ankoppelschicht an die Oberfläche des Behältnisses anschmiegt und beim Abnehmen des Behältnisses wieder vom Behältnis löst.

Mit dem erfindungsgemäßen Füllstandsmeßgerät kann in vorteilhafter Weise die Phasengrenze zwischen flüssigem und gasförmigem Medium in einer Gasflasche geortet und damit der Füllstand ermittelt und angegeben werden. Es sind hierzu keine Änderungen an der Gasflasche erforderlich. Die Gasflaschen sind beliebig und, abgesehen vom Aufstellen der Gasflaschen auf das Gerät, ohne zusätzlichen Aufwand wechselbar.

## Beschreibung

Die Erfindung betrifft ein Füllstandsmeßgerät, das den Füllstand eines Mediums in einem Behältnis von außen mittels Ultraschall mißt. Ein bevorzugtes Anwendungsgebiet ist hierbei die Erfassung des Füllstandes von Gasflaschen bzw. Druckbehältnissen, in denen zumindest eine Phasengrenze des Mediums vorliegt.

In vielen Bereichen der Industrie und des alltäglichen Lebens werden geschlossene Gasflaschen mit flüssigem Inhalt benutzt, bei denen der Inhalt nicht ohne weiteres bestimmt werden kann. Speziell für die Fälle, in denen Gasflaschen mobil eingesetzt werden, wie z.B. beim Camping, ist die Notwendigkeit der Füllstandsmessung besonders groß, da Wechselflaschen nicht jederzeit greifbar sind.

Hierzu ist es bekannt, den Inhalt der Gasflaschen durch Wiegen zu ermitteln. Dies ist jedoch umständlich, zumal der Tara-Anteil beim Wägen sehr hoch ist.

Weiterhin ist die Möglichkeit bekannt, den Füllstand mittels Ultraschall zu ermitteln. Hierbei wird ein Ultraschallsignal von unten durch die Behälterwand der Gasflasche eingekoppelt. Das Ultraschallsignal wird an der Flüssigkeitsoberfläche bzw. dem Flüssigkeitsspiegel reflektiert und kehrt zum Wandler zurück. Über die Schallaufzeit läßt sich der Füllstand ermitteln.

Grundsätzlich ist es bei der Anwendung von Ultraschall erforderlich, den in einem elektromechanischen Wandler erzeugten Ultraschall in das Ausbreitungsmedium einzukoppeln. Für viele technische Applikationen, insbesondere die Füllstandmessung, muß der Schall durch die Behälterwand in dessen gefüllten Innenraum geleitet werden. Im Stand der Technik erfolgt dies durch kraftschlüssiges Ankleben des Ultraschallsensors an die Behälterwand oder durch eine mit dem Behälter fest verbundene Klemmvorrichtung unterstützt durch Koppelmittel wie Fett oder Gel.

Für den Einsatz dieser Technik bei Gasflaschen sind daher zur Anbringung des Ultraschallsensors Änderungen an der Flaschenaußenhaut notwendig. Dies ist gerade in solchen Fällen umständlich, in denen Flaschen vorliegen, die häufig gewechselt werden und/oder nicht verändert werden sollen. Außerdem ist der dafür erforderliche Aufwand unwirtschaftlich.

Die DE 195 38 696 A1 offenbart eine Anordnung zur Überwachung eines vorbestimmten Füllstandes einer Flüssigkeit in einem Behälter. Dieses Pegelüberwachungsgerät wird auf der Höhe des zu überwachenden, vorbestimmten Füllstandes an der Außenseite des Behälters angebracht, so daß ein Abweichen von dem vorbestimmten Füllstand oder ein Erreichen des Füllstandes detektiert werden kann. Das Gerät umfaßt ein Trägerelement, einen Ultraschallwandler, eine Befestigungsvorrichtung und einen Anpreßmechanismus, der den Ultraschallwandler bei einer Befestigung des Träger-elementes am Behälter gegen diesen drückt. Vor dem Anbringen des Gerätes wird eine Kopplungsschicht aus Silicon-Gel zwischen den Wandler und die Behälterwand gebracht, um die akustische Übertragung bzw. Ankopplung zu verbessern.

Die DE 27 43 394 B2 befaßt sich mit der Ausgestaltung einer Befestigungsvorrichtung für einen für die Füllstandsmessung bestimmten Ultraschallwandler an einem Behälter, mit der eine konstante und definierte Zugspannung bei Anbringen des Ultraschallwandlers am Behälter erzeugt werden soll.

Es ist eine Aufgabe der vorliegenden Erfindung, ein Füllstandsmeßgerät für Behältnisse, insbesondere Gasflaschen, bereitzustellen, bei dessen Einsatz keine Änderungen an den Behältnissen vorgenommen werden müssen. Das Meßgerät soll weiterhin einen schnellen und einfachen Wechsel der zu messenden Behältnisse ermöglichen.

Die Erfindung wird mit dem Füllstandsmeßgerät gemäß Anspruch 1 gelöst. Vorteilhafte Ausgestaltungen des Füllstandsmeßgerätes sind Gegenstand der Unteransprüche.

Das erfindungsgemäße Füllstandsmeßgerät weist einen Ultraschallwandler, ein Trägerelement und einen Anpreßmechanismus auf. Der Ultraschallwandler ist mit einer Ultraschall-Ankoppelschicht aus dauerhaft elastischem Material versehen, die mit der abstrahlenden Oberfläche des piezoelektrischen Elementes (z.B. piezoelektrische Keramik mit aufgebrachten Elektroden) des Wandlers fest verbunden ist. Der Anpreßmechanismus ist so angeordnet, daß er den Ultraschallwandler im Meßzustand gegen ein auf das Füllstandsmeßgerät aufgebrachtes Behältnis preßt, wobei sich die Ankoppelschicht an die Oberfläche des Behältnisses anschmiegt. Beim Abnehmen bzw. Abkoppeln des Behältnisses löst sich der Wandler mit der Ankoppelschicht automatisch wieder von der Behältniswand, ohne daß irgendein zusätzlicher Mechanismus betätigt werden muß.

In der bevorzugten Ausführungsform erfolgt das Anpressen automatisch, vorzugsweise ohne zusätzlichen Energieaufwand, durch das Aufsetzen des Behältnisses.

Vorzugsweise handelt es sich bei dem Anpreßmechanismus um ein elastisches Element, beispielsweise ein Federelement, das durch das Aufsetzen des Behältnisses auf den Ultraschallwandler zumindest teilweise zusammengedrückt wird, so daß der Wandler durch die Rückstellkraft des Federelementes gegen die Behältniswand gepreßt wird.

Es sind jedoch auch andere, beispielsweise aktive Vorrichtungen denkbar, mit denen der Wandler während des Meßbetriebes gegen die Behältniswand gedrückt werden kann.

Mit dem erfindungsgemäßen Füllstandsmeßgerät kann in vorteilhafter Weise die Phasengrenze zwischen flüssigem und gasförmigem Medium in einer Gasflasche geortet und damit der Füllstand ermittelt und angegeben werden. Es sind hierzu keine Änderungen an der Gasflasche erforderlich. Die Gasflaschen sind beliebig und, abgesehen vom Aufstellen der Gasflaschen auf das Gerät, aufgrund der automatischen Ankopplung und Abkopplung des Ultraschallwandlers ohne zusätzlichen Aufwand wechselbar.

Das Gerät zeichnet sich in seiner bevorzugten Ausführungsform nach Anspruch 2 dadurch aus, daß der Ultraschallwandler mit flexibler bzw. elastischer Ankoppelschicht und dem flexiblen Anpreßmechanismus durch das Aufstellen der Gasflasche auf das Gerät automatisch von unten an die Gasflasche gepreßt wird.

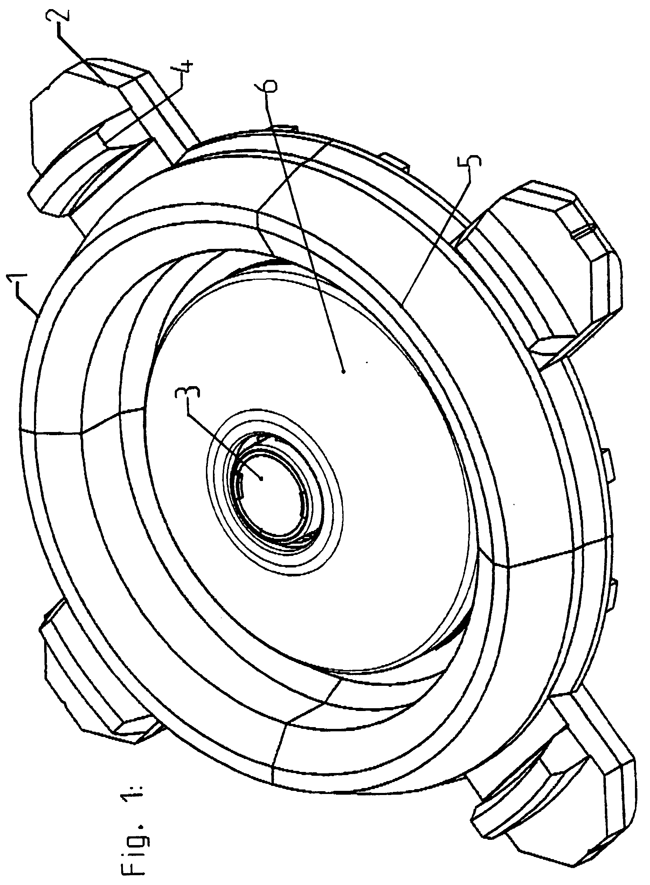

In der Ausführungsform, wie sie in den Figuren 1 bis 4 dargestellt ist, ist zudem das Aufsetzen der dafür vorgesehenen Gasflaschen auf das Gerät bzw. den Ultraschallwandler aufgrund der kreisförmig um den Wandler angeordneten Erhebungen bzw. Stege nur in einer genau definierten Position relativ zum Ultraschallwandler möglich, so daß jederzeit eine zuverlässige Messung ermöglicht wird.

Das Gerät ist kostengünstig herstellbar und durch seinen robusten und einfachen Aufbau in besonderer Weise für den mobilen Einsatz geeignet.

Ein bevorzugtes Ausführungsbeispiel des erfindungsgemäßen Füllstandsmeßgerätes wird im folgenden in Verbindung mit den Zeichnungen näher erläutert. Hierbei zeigen:
- Figur 1: ein Beispiel eines erfindungsgemäßen Füllstandsmeßgeräts in perspektivischer Ansicht von schräg oben;
- Figur 2: das Füllstandsmeßgerät der Figur 1 in Schnittansicht von der Seite;
- Figur 3: das Füllstandsmeßgerät der Figur 1 mit aufgesetzter 5 kg-Flüssiggasflasche in Schnittansicht von der Seite; und
- Figur 4: das Füllstandsmeßgerät der Figur 1 mit aufgesetzter 11 kg-Flüssiggasflasche in Schnittansicht von der Seite.

Figur 1 zeigt ein Beispiel eines erfindungsgemäßen Füllstandsmeßgeräts in perspektivischer Ansicht von schräg oben. Das Gerät besteht aus einem Trägerelement 1, im vorliegenden Beispiel in Form eines Gerätefußes, der einen festen Stand des Gerätes ermöglicht. Die Standfläche des Fußes ist hierzu kreisförmig mit vier Ausläufern 2 ausgestaltet, könnte jedoch auch einen anderen, beispielsweise mehreckigen Querschnitt aufweisen.

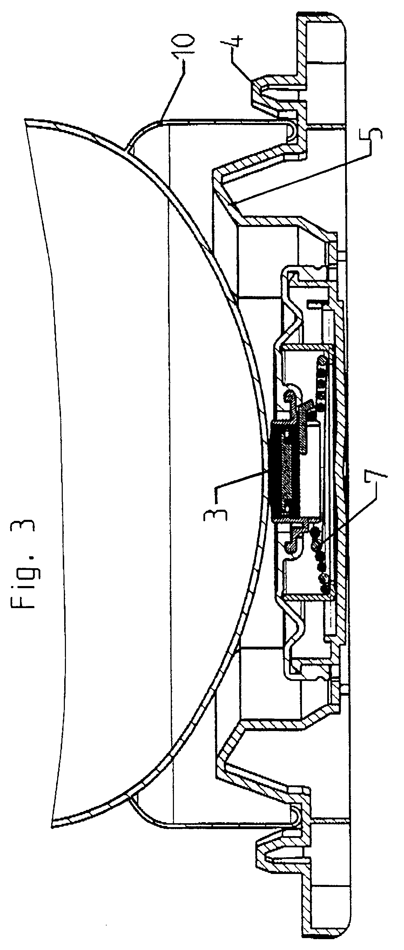

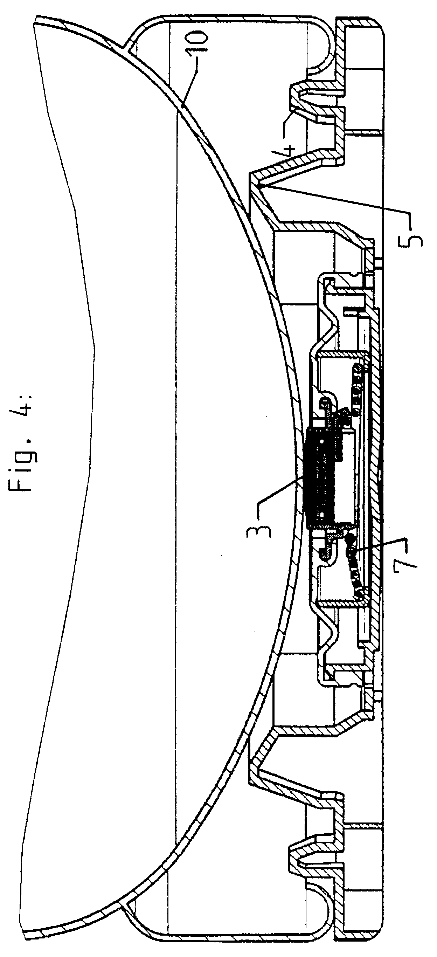

Im vorliegenden Beispiel ist das Trägerelement 1 weiterhin so ausgestaltet, daß ein aufgesetztes Behältnis in jedem Falle in einer definierten Position, in diesem Beispiel zentriert, über dem Ultraschallwandler 3 angeordnet ist. Es sind daher bei der Benutzung des Gerätes keinerlei Justierarbeiten erforderlich. Das Trägerelement weist hierfür vier auf einer Kreislinie angeordnete Erhebungen bzw. Stege 4 auf. Durch geeignete Wahl des Abstandes der Stege, d.h. des Radius der Kreislinie, und der Dicke der Stege wird erreicht, daß im vorliegenden Fall Behältnisse mit zwei unterschiedlichen Größen bzw. Durchmessern stets genau positioniert auf dem Trägerelement aufsitzen. Diese Funktion ist schematisch in den Figuren 3 und 4 dargestellt.

Die Bodenfläche von Behältnissen mit unterschiedlichem Durchmesser kann sich in diesem Fall u.U. in unterschiedlichem Abstand zur Bodenfläche des Trägerelementes befinden. Der Ultraschallwandler liegt jedoch aufgrund des (in Figur 1 nicht sichtbaren) Anpreßmechanismus, im vorliegenden Beispiel in Form eines Federelementes, stets am Boden des Behältnisses an. Das Gerät ist so ausgestaltet, daß der Ultraschallwandler bei Aufsetzen eines Behältnisses gegen die Kraft des Federelementes zumindest über eine geringe Distanz nach unten gedrückt wird, so daß ihn diese Federkraft gegen die Bodenfläche des Behältnisses drückt bzw. preßt.

Das Trägerelement besteht vorzugsweise aus Kunststoff und hat einen Außendurchmesser von ca. 300 mm. Die Höhe der Stege 4 liegt im vorliegenden Beispiel im Ruhezustand des Gerätes, d.h. ohne aufgesetztes Behältnis, unterhalb des Niveaus der Wandleroberfläche. Das Trägerelement kann auf einer Unterlage festgeschraubt werden.

Im zentralen Bereich des Trägerelementes ist der eigentliche Meßsensor, der Ultraschallwandler 3 angeordnet. Der Ultraschallwandler ist bei diesem Beispiel über eine umlaufende Membran 6 aus dünnem und biegsamem, beispielsweise gummiartigem Material am Trägerelement 1 befestigt.

In Figur 1 ist zu erkennen, daß am Trägerelement ein weiteres erhabenes Element in Form eines kreisförmigen Steges 5 innerhalb der Kreislinie vorgesehen ist, auf der die Stege 4 angeordnet sind. Der kreisförmige Steg 5 überragt die Stege 4 in Höhe. Er dient insbesondere zum Schutz des Ultraschallwandlers vor Stößen beim Aufsetzen der Gasflaschen, indem er den Stoßweg zum Boden hin wirksam begrenzt.

Selbstverständlich muß zu diesem Zweck nicht unbedingt die dargestellte durchgehenden Kreisform für den Steg 5 gewählt werden, obwohl diese besonders vorteilhaft ist, da dadurch der Wandler vollständig umschlossen wird. Es sind auch andere Geometrien, beipielsweise einzelne, in beliebiger dichter Anordnung um den Wandler herum angeordnete Stege bzw. Erhebungen zur Ausübung dieser Schutzfunktion möglich.

Beim Einsatz oder bei der Überprüfung oder Füllstandsmessung von Gasflaschen werden diese in der Regel mit einem Gurt an einer Wand befestigt. Dies erfordert, daß das Füllstandsmeßgerät für unterschiedliche Flaschengrößen in unterschiedlichem Abstand zur Wand angeordnet werden muß. Um dies ohne Probleme zu ermöglichen, ist im vorliegenden Beispiel für die Stege 4 keine durchgehende Kreisform gewählt worden. Wie aus der Figur 1 deutlich wird, kann aufgrund dieser Geometrie das Trägerelement im Falle des Einsatzes von Gasflaschen mit kleinerem Durchmesser näher an einer Wand positioniert werden.

Für andere Einsätze des Gerätes ist jedoch auch für die Stege 4 eine durchgehende Kreisform entsprechend der des Steges 5 möglich. In diesem Fall kann durch den Steg 4 bereits eine Schutzfunktion vor Stößen realisiert werden, wie sie im vorliegenden Beispiel durch den Steg 5 verwirklicht wird.

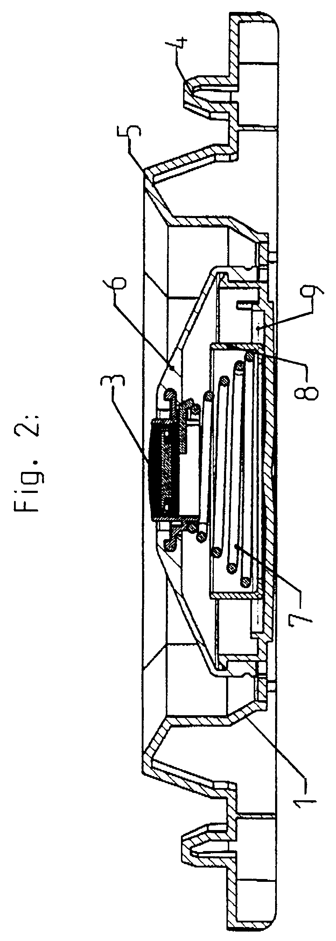

In Figur 2 ist das Füllstandsmeßgerät der Figur 1 im Schnitt von der Seite gezeigt. In der Figur ist zu erkennen, daß die Membran 6 den Ultraschallwandler 3 mit dem Trägerelement 1 verbindet. Unterhalb des Ultraschallwandlers wird der Anpreßmechanismus durch eine Kegeldruckfeder 7 realisiert. Das Federelement 7 drückt den Ultraschallwandler im Meßzustand gegen die Bodenfläche eines aufgesetzten Behältnisses (nicht dargestellt). Im vorliegenden Fall ist das Federelement im Ruhezustand, d.h. ohne aufgesetztes Behältnis, über die Rückhaltekraft der Membran 6 vorgespannt. Dadurch wird erreicht, daß der Wandler selbst bei Behältnissen mit einer Toleranz des Abstandes zwischen dem Flaschenboden und dem Untergrund, die in aufgesetztem Zustand den Wandler über unterschiedliche Distanzen nach unten drücken, mit einer ausreichenden Federkraft gegen den Behälterboden gedrückt wird. Weiterhin wird durch die Membran die maximale Auslenkung des Federelementes und damit die Höhe der Wandleroberfläche über dem Boden des Trägerelementes begrenzt. Es versteht sich von selbst, daß die Funktion der Vorspannung auch durch ein anderes flexibles Element, beispielsweise durch Drahtseile, anstelle der Membran realisiert werden kann. Das Federelement selbst ist in einer Federaufnahme 8 mit Gleitlagerfunktion 9 im Trägerelement des Gerätes verschiebbar gelagert. Diese Federaufnahme 8 erfüllt zusätzlich die Funktion eines Schutzes des Ultraschallwandlers vor Stößen durch Gasflaschen oder andere Gegenstände, indem sie den möglichen Stoßweg zum Boden hin begrenzt.

In der Praxis weist jedes Behältnis Toleranzen hinsichtlich seiner Abmessungen auf, so daß ein aufgesetztes Behältnis aufgrund des vorhandenen Spiels durch ungünstige äußere Einflüsse auf dem Gerät verschoben werden kann. Die vorgesehene Verschiebbarkeit des Federelementes ermöglicht es dem Ultraschallwandler, der aufgrund der Ankoppelschicht in gewissem Maße am Behältnisboden haftet, diese Bewegung mitzumachen. Die Ankoppelposition am Behältnis verschiebt sich daher durch derartige äußere Einflüsse nicht, so daß eine zuverlässige Messung gewährleistet ist. Ein Ausgleich von äußeren Einflüssen kann auch durch das Spiel der Kegeldruckfeder erreicht werden.

Wie aus Figur 2 ebenfalls zu erkennen ist, bildet die Membran zusammen mit einem Bodenbereich des Trägerelementes 1 einen abgeschlossenen Raum, in dem sich das Federelement 7 befindet. Hierdurch werden die Rückseite des Wandlers und das Federelement in vorteilhafter Weise vor Schmutz und Feuchtigkeit geschützt.

Die Form des Trägerelementes, das vorteilhaft in einem Stück gegossen sein kann, mit den unterschiedlichen Höhen der Stege 4 zur Positionierung der Behältnisse und des Steges 5 zum Stoßschutz, sind in Figur 2 deutlich zu erkennen.

Der Ultraschallwandler tauscht Signale über ein Signalkabel mit der (nicht gezeigten) Auswerteelektronik aus. Die Auswerteelektronik wird vorzugsweise räumlich getrennt vom Trägerelement 1 bereitgestellt. Sie umfaßt insbesondere ein Anzeigedisplay zur Anzeige des Füllstandes. Beispiele für die Auswerteelektronik für Füllstandsmessungen mit Ultraschallwandlern sind vom Stand der Technik hinreichend bekannt. Die Auswerteelektronik kann natürlich auch direkt am Trägerelement befestigt sein.

Das Füllstandsmeßgerät des in den Figuren beschriebenen Ausführungsbeispiels ist für den Einsatz von zwei unterschiedlichen Flaschengrößen, beispielsweise einer 5 kg-Flüssiggasflasche und einer 11 kg-Flüssiggasflasche vorgesehen. Zur Veranschaulichung der Positionierungsfunktion der Stege 4, ist das Füllstandsmeßgerät in den Figuren 3 bzw. 4 mit aufgesetzten 5 kg bzw. 11 kg-Gasflaschen (10) schematisch dargestellt.

Die Einkopplung der Ultraschallsignale erfolgt bei der vorliegenden Ausführungsform im wesentlichen senkrecht zur Phasengrenze des Mediums im Behältnis. Eine Schrägstellung des Trägerelementes mit dem Behältnis, wie dies beispielsweise beim Einsatz in einem Fahrzeug vorkommen kann, hat innerhalb gewisser Grenzen keinen Einfluß auf die Durchführung der Messung.

Selbstverständlich ist das erfindungsgemäße Füllstandsmeßgerät nicht auf den Einsatz eines einzigen Ultraschallwandlers begrenzt. So können beipielsweise nebeneinander zwei oder mehr Wandler eingesetzt werden, die wie im Falle eines einzigen Wandlers gleichzeitig an- und abgekoppelt werden. Von den unterschiedlichen Wandlern kann beispielsweise ein Wandler den Sender, ein anderer den Empfänger bilden. Es ist daher ebenfalls nicht zwingend erforderlich, daß die Behältnisse relativ zum Ultraschallwandler zentriert aufgesetzt werden. Eine nicht zentrierte Ankopplung an den Flaschenboden kann beispielsweise aufgrund von bestimmten Oberflächenformen der Flaschenböden von Vorteil sein.

Der Ultraschallwandler des in den Figuren dargestellten Gerätes besteht vorzugsweise aus einer mit Elektroden versehenen piezokeramischen Scheibe, deren frontseitige Oberfläche mit einer flexiblen Ankoppelschicht für Ultraschall vollständig bedeckt und fest verbunden ist. Die Ankoppelschicht ist vorzugsweise konvex geformt, wie anhand der Oberfläche des Wandlers 3 in den Figuren 2 bis 4 zu erkennen ist. Sie kann beispielsweise aus einem elastischen Polymer geringer Schallimpedanz, z.B. ALBIPOL F-1515/3 der Firma Hause Chemie, bestehen und eine Dicke von beispielsweise 2 bis 3 mm aufweisen. Mit dem Wandler wird damit eine Trockenankopplung an die Behältniswand ermöglicht.

Der Ultraschallwandler weist weiterhin einen vorzugsweise auf der piezokeramischen Scheibe integrierten Temperatursensor auf, um die temperaturabhängige Schallgeschwindigkeit im Medium bei der Messung korrekt berücksichtigen zu können.

Der bevorzugte Frequenzbereich des mit dem Wandler erzeugten Ultraschalls beim Einsatz des Füllstandsmeßgerätes liegt im Bereich von 1 bis 5 MHz, insbesondere bei 1,5 MHz.

Das Gerät zeichnet sich durch folgende weiteren Vorteile aus:

Unebenheiten (Farbtropfen, Rost, Kratzer) auf der Oberfläche der Gasflaschen können durch die elastischen Eigenschaften der Ankoppelschicht in Verbindung mit dem Anpreßmechanismus des Gerätes ausgeglichen werden. Das Gleiche gilt für Welligkeiten auf der Behälterwand oder eine gekrümmte Form der Behälterwand selbst.

Das erfindungsgemäße Gerät ermöglicht ohne Zusatz- bzw. Hilfsstoffe eine beliebig häufig lösbare akustische Verbindung mit den Gasflaschen (Trockenankopplung).

Da keine starre Verbindung zwischen der Wandleroberfläche und der Gasflaschenoberfläche hergestellt wird, eignet sich der Wandler für große Temperaturbereiche oder hohe Temperaturdifferenzen zwischen Wandler und Gasflaschen.

## Patentansprüche

1. Füllstandsmeßgerät zum kontinuierlichen Messen des Füllstandes in Behältnissen, das zumindest einen Ultraschallwandler (3), ein Trägerelement (1) und einen Anpreßmechanismus (7) aufweist,
dadurch gekennzeichnet,
daß der Ultraschallwandler mit einer Ankoppelschicht für Ultraschall aus dauerhaft elastischem Material fest verbunden ist, und der Anpreßmechanismus so angeordnet ist, daß er den Ultraschallwandler im Meßzustand gegen ein auf das Füllstandsmeßgerät aufgebrachtes Behältnis (10) preßt, wobei sich die Ankoppelschicht im Meßzustand an die Oberfläche des Behältnisses anschmiegt und beim Abnehmen des Behältnisses wieder von dem Behältnis löst.

2. Füllstandsmeßgerät nach Anspruch 1,
dadurch gekennzeichnet,
daß der Anpreßmechanismus (7) so ausgestaltet ist,
daß er den Ultraschallwandler bei Aufbringen des Behältnisses (10) automatisch gegen das Behältnis preßt.

3. Füllstandsmeßgerät nach Anspruch 1 oder 2,
dadurch gekennzeichnet,
daß der Anpreßmechanismus (7) ein elastisches Element ist.

4. Füllstandsmeßgerät nach Anspruch 3,
dadurch gekennzeichnet,
daß das elastische Element vorgespannt ist,
insbesondere durch eine Membran (6), die den Ultraschallwandler (3) mit dem Trägerelement (1) verbindet.

5. Füllstandsmeßgerät nach Anspruch 4,
dadurch gekennzeichnet,
daß die Vorspannung des elastischen Elementes durch ein Element (6) erfolgt, das gleichzeitig eine Schutzfunktion ausübt, indem es mit einem Bereich des Trägerelementes (1) einen abgeschlossenen Raum bildet, in dem das elastische Element (7) und ein Bereich des Ultraschallwandlers (3) angeordnet sind.

6. Füllstandsmeßgerät nach einem der Ansprüche 3 bis 5,
dadurch gekennzeichnet,
daß das elastische Element (7) gegenüber dem Trägerelement (1) verschiebbar gelagert ist.

7. Füllstandsmeßgerät nach einem der Ansprüche 1 bis 6,
dadurch gekennzeichnet,
daß der Ultraschallwandler (3) bei Aufbringen des Behältnisses (10) von unten gegen das Behältnis gepreßt wird.

8. Füllstandsmeßgerät nach einem der Ansprüche 1 bis 7,
dadurch gekennzeichnet,
daß der Ultraschallwandler (3) gleichzeitig als Sender und als Empfänger für Ultraschallsignale eingesetzt wird.

9. Füllstandsmeßgerät nach einem der Ansprüche 1 bis 8,
dadurch gekennzeichnet,
daß das Trägerelement (1) ein oder mehrere, insbesondere auf einer Kreislinie angeordnete, erste erhabene Elemente (4) aufweist, die zur Positionierung des aufgesetzten Behältnisses (10) relativ zum Ultraschallwandler (3) dienen.

10. Füllstandsmeßgerät nach Anspruch 9,
dadurch gekennzeichnet,
daß am Trägerelement (1), insbesondere innerhalb der Kreislinie, zumindest ein zweites erhabenes Element (5, 8) vorgesehen ist, das eine Stoßschutzfunktion für den Ultraschallwandler (3) ausübt.

11. Füllstandsmeßgerät nach einem der Ansprüche 1 bis 10,
dadurch gekennzeichnet,
daß räumlich getrennt vom Trägerelement (1) eine Meßelektronik zur Anzeige des Füllstandes vorgesehen ist.

12. Füllstandsmeßgerät nach einem der Ansprüche 1 bis 11,
dadurch gekennzeichnet,
daß die Ankoppelschicht eine konvexe Oberflächenform aufweist.
